(19) Europäisches Patentamt
European Patent Office
Office européen des brevets

(11) Veröffentlichungsnummer: **0 023 313**
**B1**

(12) # EUROPÄISCHE PATENTSCHRIFT

(45) Veröffentlichungstag der Patentschrift: **21.09.83**

(51) Int. Cl.³: **C 08 G 75/02**

(21) Anmeldenummer: **80104140.1**

(22) Anmeldetag: **16.07.80**

(54) **Verfahren zur Herstellung von Polyarylensulfiden.**

(30) Priorität: **28.07.79 DE 2930710**

(43) Veröffentlichungstag der Anmeldung: **04.02.81 Patentblatt 81/5**

(45) Bekanntmachung des Hinweises auf die Patenterteilung: **21.09.83 Patentblatt 83/38**

(84) Benannte Vertragsstaaten: **DE FR GB IT**

(56) Entgegenhaltungen:
**US-A-4 039 518**
**US-A-4 073 774**

(73) Patentinhaber: **BAYER AG, Zentralbereich Patente, Marken und Lizenzen, D-5090 Leverkusen 1, Bayerwerk (DE)**

(72) Erfinder: **Idel, Karsten, Dr., Scheiblerstrasse 81, D-4150 Krefeld (DE)**
Erfinder: **Merten, Josef, Dr., An der Blankstrasse 33a, D-4053 Korschenbroich 1 (DE)**

EP 0 023 313 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polyarylensulfiden

Polyarylensulfide sind im Prinzip bekannt (siehe beispielsweise US-PS 2 538 941 und US-PS 2 513 188). Die Herstellung kann in Substanz aus den entsprechenden Halogenaromaten und Alkali- oder Erdalkalisulfiden erfolgen.

Die Herstellung mittels Alkalisulfiden kann auch unter Mitverwendung von polaren Lösungsmitteln erfolgen (siehe dazu beispielsweise US-PS 3 354 129 bzw. DOS 1 468 782), wobei gegebenenfalls Kupferkatalysatoren mitverwendet werden können.

Gemäss DE-OS 2 453 749 bzw. US-PS 3 919 177 werden für die Herstellung von Polyarylensulfiden Alkalicarboxylate als Katalysatoren verwendet. Als Lösungsmittel dienen Amide und zur Aktivierung der Schwefelspender anorganische Basen.

Gemäss DE-OS 2 623 363 bzw. US-PS 4 038 261 werden als Katalysatoren für die Herstellung von Arylensulfidpolymeren Lithiumchlorid oder Lithiumcarboxylat eingesetzt. N-Methylpyrrolidon und Alkalihydroxide vervollständigen das Katalysatorsystem.

Gemäss US-PS 4 038 259 werden Alkalicarbonate in Kombination mit Alkalicarboxylaten, gemäss US-PS 4 038 263 Lithiumhalogenide und gemäss US-PS 4 039 518 Lithiumcarbonate als Katalysatoren für die Polyphenylensulfidherstellung eingesetzt.

Gemäss DE-OS 2 623 362 bzw. US-PS 4 038 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäss DE-OS 2 623 333 bzw. US-PS 4 046 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

Gemäss DE-OS 2 817 713 bzw. US-PS 4 116 947 werden Natriumcarboxylate in Anwesenheit definierter Mengen Wasser als Katalysatoren für die Herstellung von verzweigten Arylensulfidpolymeren verwendet.

Gegenstand der vorliegenden Erfindung ist demgegenüber ein Verfahren zur Herstellung von Polyarylensulfiden mit einem Schmelzfluss im Bereich von 1–700 g/10 Min., die gegebenenfalls verzweigt sein können, aus

a) p-Dihalogenbenzolen, die aus 50 bis 100 Mol-% Verbindungen der Formel 1

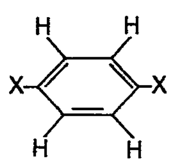

1

und aus 0 bis 50 Mol-% Dihalogenbenzolen der Formel 2 bestehen,

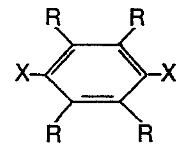

2

wobei X Fluor, Chlor, Brom oder Jod ist und

R gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, wobei jedoch mindestens ein R verschieden von Wasserstoff ist, und

b) 0 bis 2,0 Mol-%, bezogen auf den p-Dihalogenbenzolanteil, eines Polyhalogenaromaten der Formel 3

$$Ar\ X_{n'} \qquad 3$$

wobei Ar ein beliebiger aromatischer Rest mit 6 bis 24 C-Atomen und mindestens 3 freien Wertigkeiten ist, X die gleiche Bedeutung wie in Formel 1 und 2 hat und n $\geq$ 3 ist, und einem

c) Alkalisulfid, bevorzugt Natrium- oder Kaliumsulfid oder deren Mischen, bevorzugt in Form der Hydrate oder wässriger Mischungen, gegebenenfalls zusammen mit Alkalihydroxiden in einem

d) polaren Lösungsmittel, bevorzugt einem Amid oder Lactam, insbesondere einem N-Alkyllactam, wobei das molare Verhältnis von a) zu c) im Bereich von 0,98:1 bis 1,02:1 und von c) zu d) im Bereich von 1:1 bis 1:10 liegt, bei einer Polykondensationszeit von bis zu 60 Stunden, vorzugsweise von 2 bis 15 Stunden, und einer Polykondensationstemperatur zwischen 160 und 285 °C, bevorzugt zwischen 190 und 275 °C, das dadurch gekennzeichnet ist, dass die Reaktion in Anwesenheit von 0,05–2,0 Mol, bevorzugt 0,1–1,5 Mol, bezogen auf 1 Mol Alkalisulfid, eines Trinatrium- oder Trikaliumphosphats oder deren Mischungen, durchgeführt wird, wobei vorzugsweise die Trialkaliphosphate in Form ihrer Hydrate oder in wässrigen Mischungen eingesetzt werden und vor der Zugabe der p-Dihalogenbenzole eine oder mehrere Entwässerungsstufen durchgeführt werden.

Nach dem erfindungsgemässen Verfahren werden Polyarylensulfide mit hoheren inhärenten Viskositäten bzw. Grenzviskosittszahlen und niedrigerem Schmelzfluss erhalten, als nach einem analogen Verfahren ohne die Mitverwendung der Trialkaliphosphate.

Die erfindungsgemäss erhältlichen Polyarylensulfide sind somit thermoplastische Kunststoffe mit einem guten mechanischen Eigenschaftsbild und gleichzeitig guter Verarbeitbarkeit.

Als Alkalisulfide werden bevorzugt Natrium- und Kaliumsulfid ($Na_2S$ bzw. $K_2S$) oder Mischunten davon im allgemeinen als Hydrat oder in Mischungen mit Wasser verwendet.

Ebenso werden die erfindungsgemäss zu verwendenden Alkaliphosphate, bevorzugt in Form ihrer Hydrate oder in Mischungen mit Wasser eingesetzt, z.B. tert.-Natriumphosphat $Na_3PO_4 \times 12 H_2O$ oder tert.-Kaliumphosphat $K_3PO_4 \times 3 H_2O$.

Die erfindungsgemäss zu verwendenden Phosphate können aber auch direkt in der Reaktionslösung aus den primären oder sekundären bzw. Dihydrogen- oder Hydrogenphosphaten durch Zugabe entsprechender stöchiometrischer Mengen Alkalihydroxid erzeugt werden, so z.B. durch Zusammengeben von einer wässrigen Lösung von Kalium-dihydrogen-phosphat $KH_2PO_4$ mit 2 Mol Kalilauge oder Di-natrium-hydrogenphosphat $Na_2HPO_4 \times 12 H_2O$ mit 1 Mol Natronlauge.

Es können natürlich auch direkt die entsprechenden Alkalihydroxide gegebenenfalls als wässrige Mischungen mit Phosphorsäure im gewünschten stöchiometrischen Verhältnis in der Reaktionslösung zur Neutralisation gebracht werden, wobei eine besonders homogene Verteilung der entstehenden erfindungsgemäss zu verwendenden Phosphate erreicht wird.

Ebenso können die Alkalisulfide aus Schwefelwasserstoff oder den Alkalihydrogensulfiden und entsprechenden stöchiometrischen Mengen Alkalihydroxiden durch Neutralisation in oder ausserhalb der Reaktionslösung erhalten werden. Es empfiehlt sich auch bei Verwendung der reinen Alkalisulfide zusätzlich Alkalihydroxide zuzugeben, um häufig beigemengte Alkalihydrogensulfide zu neutralisieren.

Beispiele für die erfindungsgemäss einzusetzenden p-Dihalogenbenzole der Formel 1 sind: p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol. Sie sind allein oder im Gemisch miteinander einsetzbar.

Beispiele für die erfindungsgemäss einzusetzenden p-Dihalogenbenzole der Formel 2 sind, 2.5-Dichlortoluol, 2,5-Dichlorxylol, 1-Ethyl-2-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für die erfindungsgemäss einzusetzenden Polyhalogenaromten der Formel 3 sind: 1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2',4,4'-Tetrachlorbiphenyl.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden jedoch Lactame und Amide und besonders bevorzugt N-Alkyllactame eingesetzt.

Lactame im Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z.B. einen Alkylrest mit 1 bis 5 C-Atomen.

N-Alkyllactame im Sinne der vorliegenden Erfindung sind wie die genannten Lactame definiert, tragen jedoch zusätzlich am Stickstoffatom einen Alkylrest mit 1 bis 3 C-Atomen.

Amide im Sinne der Erfindung sind solche von Carbonsäuren mit 1 bis 5 C-Atomen, und bevorzugt solche von Carbonsäuren mit 1 bis 5 C-Atomen, die im Amidstickstoff zwei Alkylreste mit 1 bis 3 C-Atomen tragen.

Beispielsweise kommen als Lösungsmittel in Frage:
Dimethylformamid, Dimethylacetamid, Caprolactam, N-Methylcaprolactam, N-Ethylcaprolactam, N-Isopropylcaprolactam, N-Methyl-2-pyrrolidon, N-Ethyl-2-pyrrolidon, N-Isopropyl-2-pyrroldion, N-Methyl-3-methyl-2-pyrrolidon, N-Methyl-5-methyl-2-pyrrolidon, N-Methyl-3,4,5-trimethyl-2-pyrrolidon, N-Methyl-2-piperidon, N-Ethyl-2-piperidon, N-Methyl-6-methyl-2-piperidon, N-Methyl-3-ethyl-2-piperidon, N-Methyl-2-oxohexamethylenimin, N-Ethyl-2-oxohexamethylenimin.

Es können auch Mischungen der vorstehenden Lösungsmittel gewählt werden.

Nach dem erfindungsgemässen Verfahren können das p-Dihalogenbenzol, gegebenenfalls mit einem Polyhalogenaromaten der Formel 3, das Alkalisulfid gegebenenfalls mit Alkalihydroxid und die Trialkaliphosphate im Prinzip in jeder Form in dem erfindungsgemäss einzusetzenden polaren Lösungsmittel gemischt und zur Reaktion gebracht werden. Dabei ist es jedoch von Vorteil, wenn das Wasser, das in Form von Hydratwasser der Alkalisulfide und Alkaliphosphate und/oder frei als Mischungskomponente von wässrigen Lösungen der erfindungsgemäss einzusetzenden Sulfide und Phosphate vorliegen kann, vor der Zugabe des p-Dihalogenbenzols mindestens grösstenteils entfernt wird.

Die Entwässerung kann beispielsweise durch Abdestillieren des Wassers aus der Reaktionslösung erfolgen. In einer bevorzugten Reaktionsführung wird dabei das N-Alkyllactam zusammen mit den erfindungsgemäss zu verwendenden Phosphaten vorgelegt und in einer ersten Entwässerungsstufe das Hydrat- oder Mischungswasser entfernt. Anschliessend werden die gewünschten Anteile Alkalisulfid zugegeben und gegebenenfalls eine zweite Entwässerungsstufe durchgeführt. Danach werden das p-Dihalogenbenzol und gegebenenfalls die Polyhalogenverbindung der Formel 3 hinzugefügt und unter weiterer Temperatursteigerung die eigentliche Polymerreaktion in Gang gesetzt.

Bei den Entwässerungsstufen ist die Temperatur langsam zu steigern, um ein Aufschäumen des Reaktionsgemisches zu verhindern.

Sobald die Siedetemperatur des Lösungsmittels erreicht ist, kann mit der eigentlichen Polymerreaktion begonnen werden.

Die Reaktionstemperatur der erfindungsgemässen Polykondensation liegt in der Regel im Bereich von 160 °C bis 285 °C, bevorzugt im Bereich

von 190 bis 275 °C. Die Reaktionszeit kann bis zu 60 Stunden betragen, liegt jedoch vorzugsweise zwischen 2 und 15 Stunden. Eine stufenweise Steigerung der Reaktionstemperatur während dieser Zeit ist von Vorteil.

Das p-Dihalogenbenzol und das Alkalisulfid werden möglichst äquimolar umgesetzt. Das Molverhältnis p-Dihalogenbenzol/Alkalisulfid liegt demgemäss bevorzugt im Bereich von 0,98:1 bis 1,02:1.

Die erfindungsgemäss einzusetzenden Polyhalogenaromaten der Formel 3 können bis zu einer Menge von mehreren Mol-%, bezogen auf den Anteil p-Dihalogenbenzol, je nach den Versuchsbedingungen zugesetzt werden, in der Regel wird jedoch ein Anteil von 0 bis 2,0 Mol-%, bezogen auf den Anteil p-Dihalogenbenzol, ausreichend sein.

Die Menge Lösungsmittel kann in einem weiten Bereich gewählt werden, liegt im allgemeinen jedoch bei 1 bis 10 Mol, pro Mol Alkalisulfid.

Je nach Anteilen von Alkalihydrogensulfid im technischen Alkalisulfid wird die Menge Alkalihydroxid gewählt, Sie kann bis 0,8 Mol pro Mol Alkalisulfid liegen, kann jedoch erforderlichenfalls auch höher gewählt werden.

Als Alkalihydroxide werden z.B. Natriumhydroxid und Kaliumhydroxid oder Mischungen davon eingesetzt. Es können auch für den gleichen Zweck Alkalicarbonate wie Natriumcarbonat, Kaliumcarbonate wie Natriumcarbonat, Kaliumcarbonat sowie deren Mischungen verwendet werden.

Die Menge der erfindungsgemäss zu verwendenden Alkaliphosphate kann je nach den Versuchsbedingungen variiert werden, liegt aber bei 0,05 bis 2 Mol, bevorzugt 0,1 bis 1,5 Mol, pro Mol Alkalisulfid.

Die Aufarbeitung des Reaktionsgemisches kann in mannigfaltiger Weise erfolgen.

Das Polyarylensulfid kann direkt aus der Reaktionslösung oder erst nach Zugabe z.B. von Wasser nach üblichen Verfahrensweisen abgetrennt werden, beispielsweise durch Filtration oder durch Zentrifugieren.

Nach der Filtration schliesst sich im allgemeinen zur Entfernung von anorganischen Bestandteilen, die den Polymeren anhaften können, wie z.B. die Alkalisufide oder die erfindungsgemäss zu verwendenden Phosphate, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschliessende Wäsche wie oben beschrieben, gewonnen werden.

Gegenüber der unkatalysierten Darstellung von Polyarylensulfiden werden nach dem erfindungsgemässen Verfahren Polyarylensulfide mit einer höheren Granzviskositätszahl und einem niedrigeren Schmelzfluss erhalten.

In den deutschen Offenlegungsschriften 2 623 333 und 2 623 363 wird als Bezugsgrösse für das Molekulargewicht die inhärte Viskosität in 1-Chlor-naphthalin bei 206 °C und einer Konzentration von 0,4 g Polymer/100 ml Lösungsmittel gemessen. In diesem Temperatur- und Konzentrationsbereich ist jedoch die Gefahr der Bildung von Assoziaten relativ gross. Zur Charakterisierung der erfindungsgemässen Polyarylensulfide wird deshalb die Grenzviskositätenzahl [η] bestimmt, die sich aus Messungen inhärenter Viskositäten mit der Extrapolation der Konzentration gegen Null ergibt.

$$[\eta] = \frac{\ln\eta\ \mathrm{rel}}{C} \quad (C \rightarrow O)$$

Der im Vergleich zu unkatalysiert erhaltenen Polyarylensulfiden niedrige Schmelzfluss der erfindungsgemäss hergestellten Polyarylensulfide bietet besondere verarbeituntstechnische Vorteile. (Das Schmelzfliessverhalten wird nach ASTM D 1238-70, unter Verwendung eines 5 kg Gewichtes und Änderung der Temperatur auf 316 °C gemessen, wobei der Wert in g/10 Min. ausgedrückt wird).

Da der Schmelzfluss der erfindungsgemäss hergestellten Polyarylensulfide im Bereich von 1–700 g/10 Min., vorzugsweise 1–250 g/10 Min. liegt, kann eine sonst nötige zusätzliche Aushärtungsstufe erspart werden und die Produkte direkt ohne weitere Aushärtung über Extrusion, Extrusionsblasen, Spritzgiessen oder sonst üblichen Verarbeitungstechniken zu Folien, Formkörpern oder Fasern verarbeitet werden, welche in üblicher Weise Verwendung finden als Automobil-Teile, Armaturen, Elektro-Teile wie z.B. Schalter, Elektronische Tafeln, Chemikalienresistente Teile und Apparate wie Pumpen-Gehäuse und Pumpen-Flügelräder, Ätzbadschalen, Dichtungsringe, Teile von Büromaschinen und Fernmeldeeinrichtungen sowie Haushaltsgeräte, Ventile, Kugellagerteile etc.

Durch zusätzliche Bearbeitungsschritte wie z.Tempern oder Abmischen können die Eigenschaften der Polyarylensulfide modifiziert bzw. optimiert werden.

Die erfindungsgemäss hergestellten Polyarylensulfide können auch mit anderen Polymeren, mit Pigmenten und Füllstoffen, wie beispielsweise Graphit, Metallpulver, Glaspulver, Quarzmehl oder Glasfasern, gemischt oder mit der für Polyarylensulfide üblichen Additiven, wie beispielsweise üblichen Stabilisatoren oder Entformungsmitteln versetzt werden.

Beispiel 1

Dieses Beispiel beschreibt als Vergleichsbeispiel die Darstellung von Polyphenylensulfid ohne die erfindungsgemässe Katalyse (US-Pat. 3 354 129).

In einem mit Rührer ausgerüsteten Autoklav wurden 130 g (1,0 Mol/60prozentige Ware) Natriumsulfid ($Na_2S \times H_2O$) und 300 g N-Methyl-2-pyrrolidon zusammengegeben. Das Gemisch wurde mit Stickstoff gespült und langsam bis auf 202 °C erwärmt. Dabei destillierten insgesamt 29

ml Wasser ab. Der Ansatz wurde anschliessend auf ca. 160 °C heruntergekühlt und 147 g p-Dichlorbenzol in ca. 50 g N-Methyl-2-pyrrolidon hinzugefügt. Man erwärmt das Reaktionsgemisch unter einem Stickstoffvordruck von 2,5 bar in 30 Min. auf 245 °C, wobei der Druck auf 10 bar ansteigt, und hält diese Temperatur 3 Stunden. Nach Abkühlen auf Raumtemperatur wird ein grauer Feststoff isoliert, der anschliessend einer sorgfältigen Wasserwäsche zur Entfernung der anorganischen Beimengungen unterworfen wird.

Man trocknet bei 80 °C im Vakuum und erhält 100,3 g (93%) Poly-(p-phenylensulfid) mit folgenden Kenndaten:
Grenzviskositätszahl [η]: 10,2
Schmelzfliessverhalten g/10 Min.: 2400

Beispiel 2

Nach dem erfindungsgemässen Verfahren wurde Trinatriumphosphat-Hydrat $Na_3PO_4 \times 12\ H_2O$ als Katalysator eingesetzt:

712,7 g (1,87 Mol) Trinatriumphosphat-Hydrat wurden zusammen mit 1000 ml N-Methyl-2-pyrrolidon vorgelegt. Unter Stickstoff wurde der Ansatz durch langsames Aufheizen bis 165 °C entwässert. Es wurden 415 ml Destillat erhalten, das 97% Wasser enthielt. Anschliessend wurden 245,7 g 60prozentiges Natriumsulfid (1,87 Mol) und 11,7 g Natriumhydroxid in 40 ml Wasser zugegeben. Die zweite Entwässerungsstufe wurde dann entsprechend durchgeführt, wobei die Temperatur bis auf 202 °C gesteigert wurde. Dabei wurden 162 ml Destillat aufgefangen, das 140 ml Wasser enthielt.

Nach Abkühlen auf 160 °C wurden 275,6 g p-Dichlorbenzol (1,87 Mol) und 2,72 g 1,2,4-Trichlorbenzol (0,8 Mol-%, bezogen auf den Anteil p-Dichlorbenzol) in 120 ml N-Methyl-2-pyrrolidon zugegeben und der Ansatz in einem Autoklav mit Rührer nach folgendem Druck/Temperatur-Programm zeitlich gefahren:
1 Stunde 210 °C 3 bar
2 Stunden 245 °C 10,5 bar
3 Stunden 265 °C 12 bar

Danach wurde heruntergekühlt und aus dem Reaktionsgemisch nach Verdünnen mit Wasser und anschliessender Wasserwäsche 200,4 g (99%) Poly-p-phenylensulfid als grauer Feststoff mit folgenden Kenndaten isoliert:
Grenzviskositätszahl [η]: 26
Schmelzfliessverhalten g/10 Min.: 82

Beispiel 3

Im Vergleich zu Beispiel 2 wurde hier nur eine Entwässerungsstufe durchgeführt:

712,7 g (1,87 Mol) Trinatriumphosphat-Hydrat wurden zusammen mit 245,7 g 60prozentigem Natriumsulfid (1,87 Mol) 11,7 g Natriumhydroxid in 40 g Wasser und 100 ml N-Methyl-2-pyrrolidon unter Stickstoff vorgelegt.

Die Temperatur wurde langsam auf 202 °C gesteigert, wobei 509 ml Wasser zusammen mit 45 ml N-Methyl-2-pyrrolidon abdestillieren.

Anschliessend wurden 275,6 g p-Dichlorbenzol (1,87 Mol) und 2,04 g 1,2,4-Trichlorbenzol (0,6 Mol-% bezogen auf den Anteil p-Dichlorbenzol) hinzugegeben und der Ansatz nach dem gleichen Druck/Temperatur-Programm wie in Beispiel 2 gefahren. Nach Abfiltrieren und Wasserwäsche erhält man 200,3 g (99%) Poly-p-phenylsulfid.
Grenzviskositätszahl [η]: 17
Schmelzfliessverhalten g/10 Min.: 320

Beispiel 4

In diesem Beispiel wird das katalytisch wirkende Trinatriumphosphat direkt in der Reaktionslösung erzeugt:

In 1000 ml N-Methyl-2-pyrrolidon wurden unter Berücksichtigung der exothermen Neutralisation und unter Stickstoff ein Gemisch von 225 g Natriumhydroxid in 250 g Wasser und 306,25 g 60prozentige Phosphorsäure vorsichtig zusammengegeben.

Anschliessend wurden unter langsamer Temperatursteigerung des Reaktionsgemisches bis 165 °C 360 g Wasser in Form eines 92% Wasser enthaltenden N-Methyl-2-pyrrolidon/Wasser-Gemisches abdestilliert.

Danach wurden 245,7 g 60prozentiges Natriumsulfid (1,87 Mol) und 20 g Natriumhydroxid in 40 g Wasser hinzugefügt.

Die zweite Entwässerungsstufe wurde dann entsprechend durchgeführt, wobei die Temperatur bis auf 202 °C gesteigert wurde. Es wurden 168 ml Destillat aufgefangen, das 142 ml Wasser enthielt.

Nach Abkühlen auf 160 °C wurden 275,6 g p-Dichlorbenzol (1,87 Mol) und 2,72 g 1,2,4-Trichlorbenzol (0,8 Mol-% bezogen auf den Anteil p-Dichlorbenzol) in 120 ml N-Methyl-2-pyrrolidon zugegeben und der Ansatz in einem Autoklav mit Rührer nach dem Druck/Temperatur-Programm in Beispiel 2 gefahren. Die Aufarbeitung erfolgte ebenfalls gemäss Beispiel 2.

Ausbeute: 119,8 g (99%) Poly-p-phenylensulfid.
Grenzviskositätszahl [η]: 25
Schmelzfliessverhalten g/10 Min.: 92

Beispiel 5

Die Reaktionsführung entspricht der in Beispiel 2. Es wurde jedoch nun im Vergleich zu Beispiel 2 nur die halbe Menge Trinatriumphosphat-Hydrat $Na_3PO_4 \times 12\ H_2O$ (356,3 g = 0,937 Mol) eingesetzt.

Es wurden 200,6 g (99%) Poly-p-phenylensulfid erhalten.
Grenzviskositätszahl [η]: 22
Schmelzfliessverhalten g/10 Min.: 120

Beispiel 6

Reaktionsführung wie in Beispiel 2, jedoch wurden 249,65 g (0,937 Mol) Trikaliumphosphat-Hydrat $K_3PO_4 \times 3\ H_2O$ anstelle des Trinatriumphosphat-Hydrates eingesetzt.

Es wurden 199,5 g (99%) Poly-p-phenylsulfid erhalten.
Grenzviskositätszahl [η]: 19
Schmelzfliessverhalten g/10 Min.: 260

Beispiel 7

In diesem Beispiel wird das Trikaliumphosphat aus Kaliumdihydrogenphosphat und Kaliumhydroxid in dem Reaktionsmedium erzeugt.

Ein Gemisch aus 127,5 g (0,937 Mol) Kaliumdihydrogenphosphat und 150 g Wasser wurde in 1000 ml N-Methyl-2-pyrrolidon vorsichtig unter Berücksichtigung der Neutralisationswärme mit 105,1 g (1,87 Mol) KOH in 100 g Wasser zusammengegeben. Bei der anschliessenden Entwässerung wurden durch langsames Aufheizen bis 170 °C insgesamt 221 ml Wasser abdestilliert.

Danach wurden 245,7 g 60prozentiges Natriumsulfid (1,87 Mol) und 20 g Natriumhydroxid in 40 g Wasser hinzugefügt.

Die zweite Entwässerungsstufe wurde analog Beispiel 2 durchgeführt, wobei insgesamt 140 ml Wasser abdestillieren.

Nach Abkühlen auf 160 °C wurden 275,6 g p-Dichlorbenzol (1,87 Mol) und 2,72 g 1,2,4-Trichlorbenzol (0,8 Mol-% bezogen auf den Anteil p-Dichlorbenzol) in 120 ml N-Methyl-2-pyrrolidon zugefügt und analog Beispiel 2 die weitere Reaktion gefahren.

Grenzviskositätszahl [$\eta$]: 20
Schmelzfliessverhalten g/10 Min.: 218

**Patentansprüche**

1. Verfahren zur Herstellung von Polyarylensulfiden mit einem Schmelzfluss im Bereich von 1–700 g/10 Min., durch Umsetzung von

a) p-Dihalogenbenzolen, die aus 50 bis 100 Mol-% Verbindungen der Formel 1

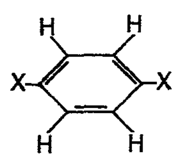

1

und aus 0 bis 50 Mol-% Verbindungen der Formel 2 bestehen,

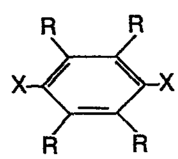

2

wobei X Fluor, Chlor, Brom oder Jod ist und

R gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, wobei jeweils mindestens ein R verschieden von Wasserstoff ist, und

b) 0 bis 2,0 Mol-%, bezogen auf den p-Dihalogenbenzolanteil eines Polyhalogenaromaten der Formel 3

$$Ar\ X_n, \quad 3$$

wobei Ar ein beliebiger aromatischer Rest mit 6 bis 24 C-Atomen und mindestens 3 freien Wertigkeiten ist, X die gleiche Bedeutung wie in Formel 1 und 2 hat und $n \geq 3$ ist, mit einem

c) Alkalisulfid in einem

d) polaren Lösungsmittel, wobei das molare Verhältnis von a) zu c) im Bereich von 0,98:1 bis 1,02:1 und von c) zu d) im Bereich 1:2 bis 1:10 liegt, bei einer Polykondensationszeit von bis zu 60 Stunden und einer Polykondensationstemperatur zwischen 160 und 285 °C, dadurch gekennzeichnet, dass die Reaktion in Anwesenheit von 0,05–2,0 Mol, bezogen auf 1 Mol Alkalisulfid von Trinatriumphosphat oder Trikaliumphosphat oder deren Mischungen durchgeführt wird.

2. Verfahren gemäss Anspruch 1, dadurch gekennzeichnet, dass die Polykondensationszeit 2 bis 15 Stunden beträgt.

3. Verfahren gemäss Ansprüchen 1 und 2, dadurch gekennzeichnet, dass die Reaktionstemperatur zwischen 190 °C und 275 °C liegt.

4. Verfahren gemäss Ansprüchen 1 bis 3, dadurch gekennzeichnet, dass die Reaktion in Gegenwart von 0,1 bis 1,5 Mol von Trialkaliphosphaten durchgeführt wird.

5. Verfahren gemäss Ansprüchen 1 bis 4, dadurch gekennzeichnet, dass die Reaktion in Anwesenheit von Trinatriumphosphat oder Trikaliumphosphat oder deren Mischungen durchgeführt wird.

6. Verfahren gemäss Ansprüchen 1 bis 4, dadurch gekennzeichnet, dass die Trialkaliphosphate in Form ihrer Hydrate oder in wässrigen Mischungen eingesetzt werden und das Wasser vor der Zugabe der p-Dihalogenbenzole ein- oder mehrstufig entfernt wird.

7. Verfahren nach Anspruch 6, dadurch gekennzeichnet, dass Trinatriumphosphat als Hydrate oder wässrige Mischungen, eingesetzt wird.

8. Verfahren nach Anspruch 6, dadurch gekennzeichnet, dass Trikaliumphosphat als Hydrate oder wässrige Mischungen eingesetzt wird.

**Claims**

1. Process for the preparation of polyarylene sulphides having a melt flow in the range of 1–700 g/min by reacting

a) p-dihylogenobenzenes which consist of 50 to 100 mol % of compounds of the formula 1

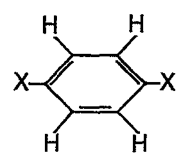

1

and of 0 to 50 mol % of compounds of the formula 2,

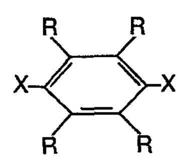

2

wherein

X is fluorine, chlorine, bromine or iodine and R is identical or different and can be hydrogen, $C_1$–$C_{20}$-alkyl, $C_5$–$C_{20}$-cycloalkyl, $C_6$–$C_{24}$-aryl, $C_7$–$C_{24}$-alkaryl or $C_7$–$C_{24}$-aralkyl, and in each case at least one R is other than hydrogen, and

b) 0 to 2.0 mol %, relative to the p-dihalogenobenzene constituent, of a polyhalogenoaromatic compound of the formula 3

Ar $X_n$, 3

wherein

Ar is any desired aromatic radical with 6 to 24 C atoms and at least 3 free valencies, X has the same meaning as in formula 1 and 2 and n $\geq$ 3, with

c) an alkali metal sulphide in

d) a polar solvent, the molar ratio of a) to c) being in the range of 0.98:1 to 1.02:1 and the molar ratio of c) to d) being in the range of 1:2 to 1:10, over a polycondensation period of up to 60 hours and a polycondensation temperature of between 160 and 285 °C, characterised in that the reaction is carried out in the presence of 0.05–2.0 mols, per 1 mol of alkali metal sulphide, of trisodium phosphate or tripotassium phosphate or mixtures thereof.

2. Process according to Claim 1, characterised in that the polycondensation time is 2 to 15 hours.

3. Process according to Claims 1 and 2, characterised in that the reaction temperature is between 190 °C and 275 °C.

4. Process according to Claims 1 to 3, characterised in that the reaction is carried out in the presence of 0.1 to 1.5 mols of tri-alkali metal phosphates.

5. Process according to Claims 1 to 4, characterised in that the reaction is carried out in the presence of trisodium phosphate or tripotassium phosphate or mictures thereof.

6. Process according to Claims 1 to 4, characterised in that the tri-alkali metal phosphates are used in the form of their hydrates or in aqueous mixtures and the water is removed in one or more stages before the addition of the p-dihalogenobenzenes.

7. Process according to Claim 6, characterised in that trisodium phosphate is used in the form of hydrates or aqueous mixtures.

8. Process according to Claim 6, characterised in that tripotassium phosphate is used in the form of hydrates or aqueous mixtures.

**Revendications**

1. Procédé de production de polysulfures d'arylènes ayant un écoulement à l'état fondu de 1–700 g/min, par réaction

a) de p-dihalogénobenzènes qui sont formés de 50 à 100 moles % de composés de formule 1

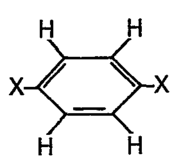

1

et de 0 à 50 moles % de composés de formule 2

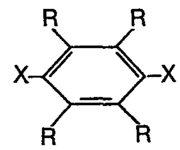

2

X représentant le fluor, le chlore, le brome ou l'iode et

les groupes R étant égaux ou différents et pouvant représenter l'hydrogène et des groupes alkyle en $C_1$ à $C_{20}$, cycloalkyle en $C_5$ à $C_{20}$, aryle en $C_6$ à $C_{24}$, alkaryle en $C_7$ à $C_{24}$ ou aralkyle en $C_7$ à $C_{24}$, au moins un groupe r étant dans chaque cas différent de l'hydrogène et

b) 0 à 2,0 moles %, par rapport à la portion p-dihalogénobenzénique, d'un composé polyhalogéno-aromatique de formule 3

Ar $X_n$, 3

où Ar désigne un reste aromatique quelconque ayant 6 à 24 atomes de carbone et au moins 3 valences libres, X a la même définition que dans les formules 1 et 2 et n $\geq$ 3, avec un

c) sulfure alcalin dans un

d) solvant polaire, le rapport molaire de a) à c) étant situé dans la plage de 0,98:1 à 1,02:1 et le rapport molaire de c) à d) étant situé dans la plage de 1:2 a 1:10, pendant une durée de polycondensation allant jusqu'à 60 heures et à une température de polycondensation comprise entre 160 et 285 °C, caractérisé en ce que la réaction est conduite en présence de 0,05 à 2,0 moles, par mole de sulfure alcalin, de phosphate trisodique ou de phosphate tripotassique ou de leurs mélanges.

2. Procédé suivant la revendication 1, caractérisé en ce que la durée de polycondensation s'éléve à 2–15 heures.

3. Procédé suivant les revendications 1 et 2, caractérisé en ce que la température de réaction se situe entre 190 et 275 °C.

4. Procédé suivant les revendications 1 à 3, caractérisé en ce que la réaction est conduite en présence de 0,1 à 1,5 mole de phosphates trialcalins.

5. Procédé suivant les revendications 1 à 4, caractérisé en ce que la réaction est conduite en présence de phosphate trisodique ou de phosphate tripotassique ou de leurs mélanges.

6. Procédé suivant les revendications 1 à 4, caractérisé en ce que les phosphates trialcalins sont utilisés sous la forme de leurs hydrates ou en mélanges aqueux et l'eau est éliminée en une ou plusieurs étapes avant l'addition des p-dihalogénobenzènes.

7. Procédé suivant la revendication 6, caractérisé en ce que le phosphate trisodique est utilisé sous la forme d'hydrate ou de mélanges aqueux.

8. Procédé suivant la revendication 6, caractérisé en ce que le phosphate tripotassique est utilisé sous la forme d'hydrates ou de mélanges aqueux.